# EUROPEAN PATENT SPECIFICATION

(11) **EP 3 239 690 B1**
(45) Date of publication and mention of the grant of the patent: **14.08.2019**
(21) Application number: 15872001.1
(22) Date of filing: 16.12.2015
(51) Int. Cl.: G01N 17/00

(54) **APPARATUS AND METHOD FOR TESTING MATERIALS AND FLUIDS AT A HIGH TEMPERATURE, SUCH AS SALTS, METALS, ALLOYS OR GLASS IN A MELTED STATE**
VORRICHTUNG UND VERFAHREN ZUR PRÜFUNG VON MATERIALIEN UND FLÜSSIGKEITEN BEI HOHER TEMPERATUR, WIE ETWA SALZEN, METALLEN, LEGIERUNGEN ODER GLAS IN GESCHMOLZENEM ZUSTAND
DISPOSITIF ET PROCÉDÉ D'ESSAI DE MATÉRIAUX ET DE FLUIDES À HAUTE TEMPÉRATURE TELS QUE SELS, MÉTAUX, ALLIAGES OU VERRES À L'ÉTAT FONDU

(30) Priority: 22.12.2014 ES 201401035
(43) Date of publication of application: 01.11.2017
(73) Proprietor: Universidad Complutense De Madrid, 28040 Madrid (ES)
(72) Inventor: SANTOS BARAHONA, Héctor, 28040 Madrid (ES); DE MIGUEL GAMO, María Teresa, 28040 Madrid (ES); LASANTA CARRASCO, María Isabel, 28040 Madrid (ES); GARCÍA MARTÍN, Gustavo, 28040 Madrid (ES); PEREZ TRUJILLO, Francisco Javier, 28040 Madrid (ES)
(74) Representative: Pons
(86) International application number: PCT/ES2015/000178
(87) International publication number: WO 2016/102719

(56) References cited:
- CN-A- 102 928 332
- US-A1- 2006 037 386
- CHO ET AL: "High temperature corrosion of superalloys in a molten salt under an oxidizing atmosphere", JOURNAL OF ALLOYS AND COMPOUNDS, ELSEVIER SEQUOIA, LAUSANNE, CH, vol. 452, no. 1, 8 February 2008 (2008-02-08), pages 11-15, XP022472892, ISSN: 0925-8388, DOI: 10.1016/J.JALLCOM.2007.01.169
- J. E. INDACOCHEA ET AL: "Corrosion performance of ferrous and refractory metals in molten salts under reducing conditions", JOURNAL OF MATERIALS RESEARCH, vol. 14, no. 05, May 1999 (1999-05), pages 1990-1995, XP055490096, US ISSN: 0884-2914, DOI: 10.1557/JMR.1999.0268
- FERNÁNDEZ A G ET AL: "Corrosion of alumina-forming austenitic steel in molten nitrate salts by gravimetric analysis and impedance spectroscopy", MATERIALS AND CORROSION, WILEY, vol. 65, no. 3, March 2014 (2014-03), pages 267-275, XP001588502, ISSN: 0947-5117, DOI: 10.1002/MACO.201307422 [retrieved on 2014-02-06]
- OTERO E ET AL: "The corrosion of some superalloys (at 1000 K) in molten eutectic mixture 60% V2O5-40% Na2SO4. The influence of the oxygen and carbon residues", CORROSION SCIENCE, OXFORD, GB, vol. 33, no. 11, November 1992 (1992-11), pages 1747-1757, XP024047797, ISSN: 0010-938X, DOI: 10.1016/0010-938X(92)90006-O [retrieved on 1992-11-01]
- DATABASE WPI Derwent Publications Ltd., London, GB; EPODOC DATABASE ET AL. & CN 102 928 332 A (HUAINAN ZHONGKE STORED ENERGY TECHNOLOGY CO LTD) 13 February 2013
- DATABASE WPI Derwent Publications Ltd., London, GB; AN 2005- EPODOC DATABASE ET AL. & JP 2004 354243 A (MITSUBISHI ELECTRIC CORP) 16 December 2004

## Description

### Application field

The present invention belongs to the field of melted materials. More specifically, it relates to corrosion and degradation tests that melted materials produce on other materials. The present invention describes an apparatus and a dynamic testing method of test pieces in media such as metals, alloys, salts or glass, all of these being in a melted state.

### State of the art

In dynamic degradation tests in melted media, some patents are known, such as CN 102928332 A. In this case, the patent falls within the field of a dynamic test with magnetic stirring, having a container resistant to exposure to the high-temperature melting phase inside the testing chamber, proceeding to initial preloading from external tanks and not proceeding in any case as a continuous closed circuit, but as a discontinuous one. The atmosphere modification provided for in this patent is limited to applying a degree of partial vacuum, not proceeding in any case to modulate the composition of the atmosphere subject to the process in order to compensate for changes in the reactivity of the melted medium derived from the release of corrosion products from the samples nor from the decomposition of the melting phase. This final aspect is crucial when facing long-term testing.

A related method and installation for degradation testing of samples exposed to a melted medium is disclosed in CHO ET AL: High temperature corrosion of superalloys in a molten salt under an oxidizing atmosphere",JOURNAL OF ALLOYS AND COMPOUNDS, ELSEVIER SEQUOIA, LAUSANNE, CH, vol. 452, no. 1, 8 February 2008 (2008-02-08), pages 11-15.

There is the need for installations that enable carrying out degradation tests on materials exposed to melted media of interest, such that they ensure continuous stable test conditions throughout the duration of the testing, particularly in terms of the influence of the gaseous medium on the reactivity of the melted medium.

In the present invention, an apparatus is described for degradation tests on materials exposed to melted media wherein the testing atmosphere is kept under control by means of an auxiliary collection system, the purge of condensates and the partial ventilation of the gases generated during the test.

### Detailed description of the invention

Apparatus and method for testing materials and fluids at high temperature, such as salts, metals, alloys or glass in a melted state.

The object of the present invention is an installation that enables carrying out degradation tests on materials exposed to melted media of interest, such that continuous stable test conditions throughout the duration of the testing are granted, particularly in terms of the influence of the gaseous medium on the reactivity of the melted medium. To do so, the installation allows operation with different melted media, arranging in the inner surfaces of the assembly of lines, apparatuses and auxiliary systems, either protective coverings or especially resistant materials that make it possible to prevent any modification of the composition of the melted medium, the corrosion of these complementary elements derived from the installation.

The present invention relates to an installation and the method associated with dynamic testing of test pieces in means such as metals, alloys, salts or glass, all of these being in a melted state. Said dynamic testing is limited to a closed circuit established between a storage tank, auxiliary systems and the testing chamber. Likewise, it has the possibility of having, in a suitable flanged joint, an *in situ* monitoring system, in real-time, of the degradation process at high temperature.

The apparatus ensures continuous circulation of the melted medium over the test pieces of materials of interest, recirculating the outlet flow from the testing chamber to a tank. In the tank, the optimal testing temperature is maintained by means of a temperature control system between the testing chamber and the tank, acting on a system of electrical resistors arranged in the walls of the tank. The assembly of lines or conduits through which the melted fluid circulates, as well as key auxiliary systems such as the pump system, must be duly heated and thermally insulated in order to minimize the loss of temperature in the fluid, in addition to preventing any phase change that could lead to mechanical problems in auxiliary systems such as the drive apparatuses.

The degradation test takes place following the experimental sequence described below. In order to control the degradation process developed during the test, the samples of interest must be introduced beforehand into the testing chamber. During the fine-tuning phase, an inert atmosphere can be ensured in the testing chamber by introducing a gas or mixture of gases suitable for such purpose. The assembly of the corrosive mass or phase must be initially introduced into the heated storage tank, wherein the temperature control loop enables the melting and heating thereof until reaching an optimal thermal level, such that in the testing chamber the experimental temperature of interest is maintained.

From the beginning of the degradation testing, the atmosphere of the testing chamber can be modified in order to counteract changes that could affect the corrosive potential of the melted medium. The support system of the tested test pieces must ensure complete immersion of the test pieces, although it can additionally have a level control in order for the test pieces to be partially immersed in the melt, subsequently making differential characterization between the affected areas, the non-affected areas and, particularly, the interface between both of them possible.

The experimental system must have an auxiliary gas circuit capable of capturing the gaseous effluents generated, condensing and purging the undesirable fractions, and recirculating the remnants to the chamber, having the possible complementary contribution from a gas tank, in order to keep the influence of the gaseous medium constant in the corrosiveness of the melted medium.

The arrangement of the inlet and outlet of the melted medium in the testing chambers must minimize as much as possible any asymmetry in the arrangement of the flow with respect to the fastening system of the test pieces and the orientation thereof in the chamber.

The tests in melted media can be done either in short periods of time, upwards of 300 hours, or over a long duration, upwards of 2000 hours of testing. These tests can include intermediary phases of stopping, visual inspection and even sample extraction in order to evaluate the development of the degradation process. In said case, the same method must be followed as the one applied at the end of the test, described below.

After covering the preset testing time for testing the samples of interest, the level of the melt in relation to the test pieces can be reduced, leaving them outside of the melting phase, while the composition of the gas phase is modified in order to reduce the degradation of the test pieces derived from the exposure to the stabilized atmosphere during the test. To this end, the auxiliary systems must be arranged in the gas circuit.

Once the temperature of the test pieces has been reduced and the melt has been withdrawn from the testing chamber (previously made inert), the test pieces anchored to the fastening system arranged in the lid of the testing chamber are extracted.

The degradation process as a whole can be monitored in real time by introducing, by means of a flanged joint arranged in line (9), a degradation sensor (10) based on materials analogous to those from which the test pieces are made. In this way, a complete and comprehensive experimental framework can be established, with in situ data from the degradation process and with tested samples that facilitate the correlation of the distinct phases of the corrosion processes and the final and/or intermediary degradation state of the tested test pieces

In this case, the temperature control is ensured by means of a control loop (8) between a temperature detector/transmitter and resistors arranged in the perimeter of the main body of the testing chamber.

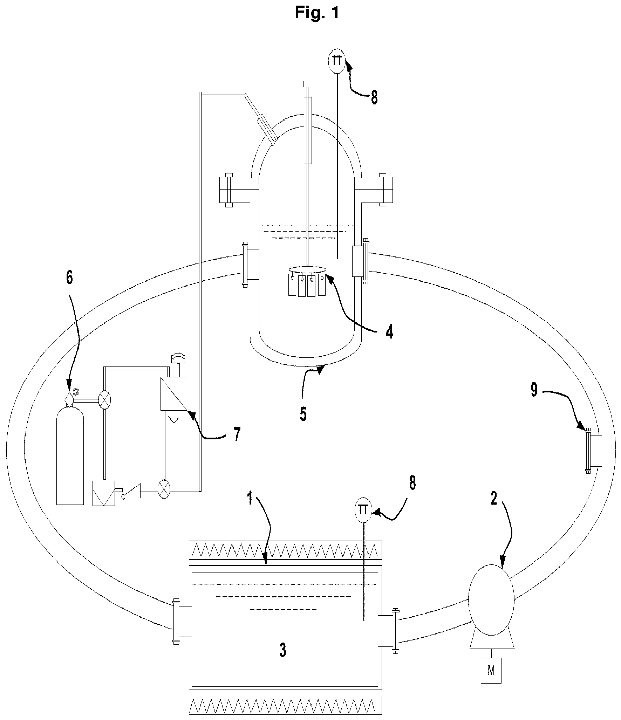

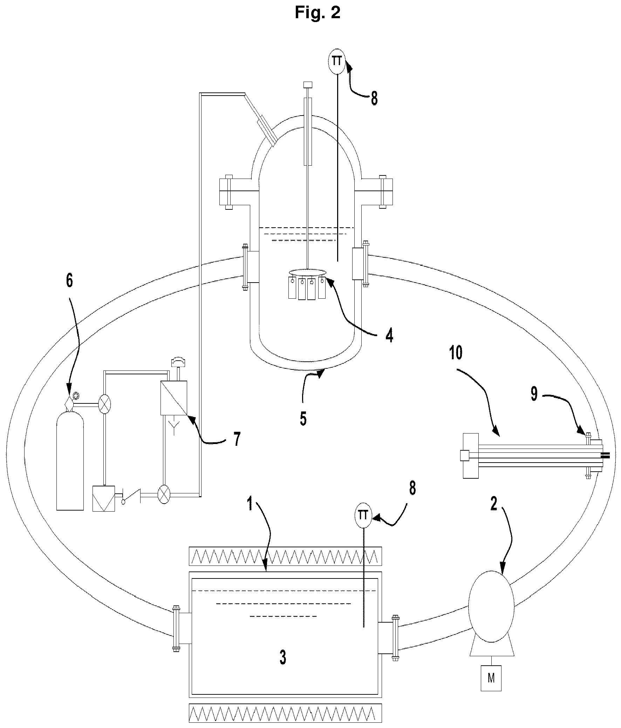

The experimental proposition described for Figure 1 can be expanded in order to monitor the degradation process throughout the experiment. To this effect, Figure 2 is included in which, in addition to Figure 1, a monitoring system is included due to the installation of a corrosion sensor (10).

### Brief description of the drawings

**Figure 1** shows a schematic view of the installation in which the degradation testing of a sample system is carried out in a closed circuit of a melted medium.
**Figure 2** shows a schematic view of the installation in which the degradation testing of a sample system is carried out in a closed circuit of a melted medium incorporating an in-line corrosion monitoring system.

### Embodiment of the invention

The present invention is additionally illustrated by means of the following examples, which are not meant to limit the scope thereof.

### Example 1.

This example relates to an apparatus for degradation testing of samples exposed to a melted medium in a closed circuit.

As seen in figure 1, the installation comprises the following elements:
- A tank (1) of melt (3) heated by means of adjusted control loop (8) acting on a system of electrical resistors or other means of heat transmission. This control loop (8) must ensure the designed testing conditions, modulating this parameter both by default and by excess, thereby preventing possible partial phase changes coming from, for example, the decomposition of one or some of the specimens present in the melted medium.
- An adjustable drive system (2) arranged in the outlet connection between the tank and the testing chamber (5). This apparatus must have safeguards in order to prevent any phase changes in the melting system that could undermine the structural integrity of the apparatus, as well as, ultimately, the operations of the assembly of the experimental installation.
- A modular testing chamber (5), including a lid that includes a fastening system (4) of the samples to be tested. This chamber must receive the melt flow enabling the partial or complete exposure of the samples of interest in an equivalent way to each other.
- An auxiliary circuit (7) for gases, including a reserve (6) of one or several gases; available in order to ensure that the reactivity of the melt (3) is maintained. These auxiliay systems (7) can include liquid/steam separators, purges of the condensed fraction, gas ventilation systems, in addition to three-way and check valves.
- A flanged in-line port (9) arranged for the insertion of complementary and auxiliary experimental systems.

This system ensures continuous circulation of the melted medium over the test pieces of materials of interest, recirculating the outlet flow from the testing chamber (5) to a tank (1). In this way, the optimal temperature of the test is maintained by means of a temperature control system between the testing chamber (5) and the tank (1), acting on a system of electrical resistors arranged in the walls of the tank (1). The assembly of lines or conduits through which the melted fluid circulates, as well as key auxiliary systems (7) such as the pump system, must be duly heated and thermally insulated in order to minimize the loss of temperature in the fluid, in addition to preventing any phase change that could lead to mechanical problems in auxiliary systems (7) such as the drive apparatuses.

### Example 2

This example relates to an apparatus for degradation testing of samples exposed to a melted medium in a closed circuit wherein an in-line corrosion monitoring system is incorporated.

As seen in figure 2, the installation comprises the following elements:
- A tank (1) of melt (3) heated by means of an adjusted control loop (8) acting on a system of electrical resistors or other means of heat transmission. This control loop must ensure the designed testing conditions, modulating this parameter both by default and by excess, preventing possible partial phase changes that come from, for example, the decomposition of one or some of the specimens present in the melted medium.
- An adjustable drive system (2) arranged in the outlet connection between the tank (1) and the testing chamber (5). This apparatus must have safeguards in order to prevent any phase changes in the melting system that could undermine the structural integrity of the apparatus, as well as, ultimately, the operations of the assembly of the experimental installation.
- A modular testing chamber (5), including a lid that includes a fastening system (4) of the samples to be tested. This chamber (5) should receive the melt flow enabling the partial or complete exposure of the samples of interest in an equivalent way to each other.
- An auxiliary circuit (7) for gases, including a reserve (6) of one or several gases; available in order to ensure that the reactivity of the melt (3) is maintained. These auxiliary systems (7) can include liquid/steam separators, purges of the condensed fraction, gas ventilation systems, in addition to three-way and check valves.
- An in-line flanged port (9) arranged for the insertion of in-line corrosion sensors (10) associated with a system for the monitoring, registering and evaluating of the degradation process.

### Example 3

This example relates to the degradation testing method of samples exposed to a melted medium.

The testing method, using the installations described in examples 1 and 2, is carried out according to the following experimental phases:
- Introduction of the sample system of interest into the sample chamber, maintaining control of the prevailing atmosphere in the chamber.
- Preheating and melting of the solid system, generator of the melting phase.
- Continuous or discontinuous introduction (according to whether it is in a closed circuit or a stirred tank) of the melted phase load, modulating the composition of the gas phase throughout testing through the auxiliary circuit associated with the testing chamber.
- Withdrawal of the samples of interest from the melted means and new change and control of the gaseous atmosphere during the sample cooling process.

## Claims

1. An installation for degradation testing of samples exposed to a melted medium, **characterized by** comprising:
- a modular testing chamber (5) with fastening means (4) for the sample system of interest;
- an auxiliary circuit (7) for effluent gases and a reservoir (6) for replenishing and modulating the gaseous atmosphere;
- a heated tank (1) for said melted medium (3), thermal adjustment means (8), and connected to the testing chamber (5) forming a closed circuit that includes a adjustable drive system (2) for the melt; and
- a flanged in-line port (9) adapted for the insertion of complementary and auxiliary experimental systems.

2. The installation for degradation testing of samples exposed to a melted medium according to claim 1, wherein in-line corrosion monitoring sensors (10) are inserted into the flanged port (9).

3. A method for the degradation testing of samples exposed to melted means, using the installation as described in any of the claims 1-2,
**characterized by**:
- adjustment of the atmosphere of the testing chamber (5) in the phase prior to testing, during the preheating and melting of the solid system generating the melted phase;
- degradation testing of the sample system with a predefined duration, continuously introducing the molten load, and maintaining an effective control of the chemical composition of the gaseous atmosphere in interaction with the sample system also considering the corrosive melted medium ;
- withdrawal of the samples of interest from the melted medium and atmosphere control intended to cut off the degradation process of the samples until they cool.

## Patentansprüche

1. Anlage zur Prüfung des Abbaus von einem geschmolzenen Medium ausgesetzten Proben, **dadurch gekennzeichnet, dass** sie Folgendes umfasst:
- eine modulare Prüfkammer (5) mit Befestigungsmitteln (4) für das Probensystem von Interesse;
- einen Hilfskreislauf (7) für Abgase und ein Reservoir (6) zum Nachfüllen und Modulieren der Gasatmosphäre;
- einen beheizten Tank (1) für das geschmolzene Medium (3), thermische Einstellmittel (8), die mit der Prüfkammer (5) verbunden sind und einen geschlossenen Kreislauf bilden, der ein einstellbares Antriebssystem (2) für die Schmelze enthält; und
- eine geflanschte Inline-Öffnung (9), die zum Einfügen komplementärer und zusätzlicher Versuchssysteme geeignet ist.

2. Anlage zur Prüfung des Abbaus von einem geschmolzenen Medium ausgesetzten Proben nach Anspruch 1, wobei Inline-Korrosionsüberwachungssensoren (10) in die geflanschte Öffnung (9) eingesetzt werden

3. Verfahren zur Prüfung des Abbaus von einem geschmolzenen Medium ausgesetzten Proben, wobei die Anlage nach einem der Ansprüche 1 bis 2 durch Folgendes
gekennzeichnet ist:
- Einstellung der Atmosphäre der Prüfkammer (5) in der Phase vor der Prüfung, während des Vorwärmens und Schmelzens des festen Systems, das die geschmolzene Phase erzeugt;
- Prüfung des Abbaus des Probensystems mit einer vorgegebenen Dauer, wobei die geschmolzene Ladung kontinuierlich eingeführt wird und eine wirksame Kontrolle der chemischen Zusammensetzung der Gasatmosphäre in Wechselwirkung mit dem Probensystem auch unter Berücksichtigung des korrosiven geschmolzenen Mediums beibehalten wird;
- Entnahme der Proben von Interesse aus dem geschmolzenen Medium und Kontrolle der Atmosphäre, wodurch der Abbauprozess der Proben bis zur deren Abkühlung unterbrochen werden soll.

## Revendications

1. Installation pour le test de dégradation d'échantillons exposés à un milieu fondu, **caractérisée en ce qu'**elle comprend :
- une chambre de test modulaire (5) avec des moyens de fixation (4) pour le système d'échantillonnage d'intérêt ;
- un circuit auxiliaire (7) pour les gaz effluents et un réservoir (6) pour la reconstitution et la modulation de l'atmosphère gazeuse ;
- un réservoir chauffé (1) pour ledit milieu fondu (3), des moyens de réglage thermique (8) et raccordé à la chambre de test (5) formant un circuit fermé qui comporte un système d'entraînement réglable (2) pour la fusion ; et
- un port bridé en ligne (9) adapté pour l'insertion de systèmes expérimentaux complémentaires et auxiliaires.

2. Installation pour le test de dégradation d'échantillons exposés à un milieu fondu selon la revendication 1, dans laquelle des capteurs de surveillance de la corrosion en ligne (10) sont insérés dans le port bridé (9).

3. Procédé pour le test de dégradation d'échantillons exposés à des milieux fondus, utilisant l'installation telle que décrite dans l'une quelconque des revendications 1-2, **caractérisé par** :
- réglage de l'atmosphère de la chambre de test (5) dans la phase précédant le test, pendant le préchauffage et la fusion du système solide générant la phase fondue ;
- test de dégradation du système d'échantillonnage avec une durée prédéfinie, en introduisant en continu la charge fondue et en maintenant un contrôle efficace de la composition chimique de l'atmosphère gazeuse en interaction avec le système d'échantillonnage, en tenant également compte du milieu fondu corrosif ;
- retrait des échantillons d'intérêt du milieu fondu et contrôle de l'atmosphère destiné à interrompre le processus de dégradation des échantillons jusqu'à ce qu'ils refroidissent.
